# EUROPÄISCHE PATENTSCHRIFT

(11) **EP 2 795 137 B1**
(45) Veröffentlichungstag und Bekanntmachung des Hinweises auf die Patenterteilung: **10.04.2019**
(21) Anmeldenummer: 12794198.7
(22) Anmeldetag: 21.11.2012
(51) Int. Cl.: F15B 13/04, F16K 11/04

(54) **WEGESITZVENTIL**
DIRECTIONAL POPPET VALVE
DISTRIBUTEUR À SIÈGE

(30) Priorität: 23.12.2011 DE 102011122349
(43) Veröffentlichungstag der Anmeldung: 29.10.2014
(73) Patentinhaber: Hydac Fluidtechnik GmbH, 66280 Sulzbach/Saar (DE)
(72) Erfinder: SCHULZ, Frank, 66440 Blieskastel-Bierbach (DE); BILL, Markus, 66265 Heusweiler (DE)
(74) Vertreter: Bartels und Partner, Patentanwälte
(86) Internationale Anmeldenummer: PCT/EP2012/004824
(87) Internationale Veröffentlichungsnummer: WO 2013/091760

(56) Entgegenhaltungen:
- DE-A1- 1 750 092
- DE-B- 1 194 663

## Beschreibung

Die Erfindung betrifft ein Wegesitzventil mit den Merkmalen im Oberbegriff von Anspruch 1.

Wegesitzventile sind in unterschiedlichen konstruktiven Bauweisen bekannt. Bei bekannten Wegeventilen kann die Sitzventilpatrone nicht vollständig kraftausgeglichen sein, was zu Performance-Verlusten und der Notwendigkeit hoher Betätigungskräfte führt. Mitunter ist die konstruktive Bauweise der bekannten Wegesitzventile dahingehend aufwendig und störungsanfällig, dass komplizierte Betätigungsmechaniken zur Betätigung und ein komplizierter Bohrungsverlauf im Block zu realisieren sind. Weiter können ein definiertes Öffnen von Steuerkanten sowie eine positive oder negative Überdeckung von Steuerkanten nur schwer oder gar nicht möglich sein. Zudem sind bei bekannten Wegesitzventilen die Fluiddrücke derart zu wählen, dass der Pumpendruck im Versorgunganschluss den Verbraucherdruck im jeweiligen Nutzanschluss und dieser wiederum den Tankdruck im Tankanschluss übersteigt.

Die DE 17 50 092 A1 beschreibt ein Wegesitzventil, umfassend in einem Ventilgehäuse angeordnete Ventilkolben zur Ansteuerung mehrerer Fluidanschlüsse, wobei die Ventilkolben mittels mindestens einer Betätigungseinrichtung in ihrer jeweiligen Stellung im Ventilgehäuse veränderbar sind, wobei die Fluidanschlüsse in Abhängigkeit von der Stellung der Ventilkolben wechselweise miteinander verbunden oder voneinander getrennt sind, wobei die Ventilkolben entlang mindestens einer Achse zumindest teilweise ineinandergreifend im Ventilgehäuse angeordnet sind, wobei die jeweilige Betätigungseinrichtung eine an mindestens einem Ventilkolben angreifende und/oder diesen zumindest teilweise durchgreifende, vorzugsweise entlang oder parallel zur Achse gerichtete, Betätigungsstange umfasst, wobei die jeweilige Betätigungsstange im jeweiligen Ventilkolben geführt ist und wobei an der jeweiligen Betätigungsstange mindestens ein an mindestens einem Ventilkolben angreifender Mitnehmer angeordnet ist. Die Ventilkolben sind dabei durch Federn oder Gehäuseteile voneinander beabstandet.

Die DE 1 194 663 offenbart ein weiteres Wegesitzventil.

Die Erfindung stellt sich die Aufgabe, ein in einfacher Weise und mit geringen Betätigungskräften betätigbares, möglichst kraftausgeglichenes Wegesitzventil bereitzustellen, welches verbesserte Steuerungsfunktionen aufweist.

Diese Aufgabe wird gelöst durch ein Wegesitzventil mit den Merkmalen von Patentanspruch 1 in seiner Gesamtheit.

Ein erfindungsgemäßes Wegesitzventil zeichnet sich dadurch aus,
- dass die den jeweiligen Ventilkolben zugeordneten Betätigungsstangen im Ventilgehäuse zumindest teilweise ineinandergreifend angeordnet sind;
- dass an einer Betätigungsstange ein erster und ein dritter Mitnehmer zur Beabstandung eines ersten und eines dritten Ventilkolbens von einem ersten bzw. dritten Sitz vorgesehen sind;
- dass an einer gegenläufigen anderen Betätigungsstange ein zweiter und ein vierter Mitnehmer zur Beabstandung eines zweiten und eines vierten Ventilkolbens von einem zweiten bzw. vierten Sitz vorgesehen sind;
- dass zwischen den gegenüberliegenden ersten und zweiten Sitzen für die paarweise ineinandergreifenden und durch eine Rückstelleinrichtung relativ zueinander bewegbaren ersten und zweiten Ventilkolben ein erster Nutzanschluss vorgesehen ist;
- dass zwischen den gegenüberliegenden dritten und vierten Sitzen für die paarweise ineinandergreifenden und durch eine Rückstelleinrichtung relativ zueinander bewegbaren dritten und vierten Ventilkolben ein zweiter Nutzanschluss vorgesehen ist;
- dass zwischen dem zweiten Sitz und dem dritten Sitz ein Versorgungsanschluss oder ein Tankanschluss vorgesehen ist; und
- dass zwischen dem ersten bzw. vierten Sitz und dem jeweiligen Ende des Ventilgehäuses jeweils ein Tankanschluss oder ein Versorgungsanschluss vorgesehen ist.

Es ist ferner vorgehen, dass die Ventilkolben in sogenannter Inline-Bauweise entlang mindestens einer Achse nacheinander und/oder zumindest teilweise ineinandergreifend im Ventilgehäuse angeordnet sind.

Im Kolbenraum, der im Ventilgehäuse entlang der mindestens einen Achse verläuft, sind zwei oder mehr Ventilkolben angeordnet und entlang der jeweiligen Achse beweg- bzw. verstellbar. Die hierzu vorgesehene jeweilige Betätigungseinrichtung kann elektrisch, beispielsweise als Elektromagnet oder als Schritt- bzw. Linearmotor, mechanisch oder als Handbetätigung ausgebildet sein. Zudem ist es denkbar, das Wegesitzventil mit Proportional- und/oder Schaltmagneten zu betreiben, anders ausgedrückt derart die jeweiligen Ventilkolben zu betätigen.

Durch die Anordnung der Ventilkolben werden eine einfache Herstellung und eine kompakte Bauweise des erfindungsgemäßen Wegesitzventils erreicht. Durch ein zumindest teilweises Ineinandergreifen von jeweils mehreren, typischerweise zwei, Ventilkolben kann der Einbauraum, genauer der im Ventilgehäuse vorgesehene Kolbenraum, gegenüber herkömmlichen Lösungen verkleinert ausgestaltet werden. Je nach Einsatzzweck des erfindungsgemäßen Wegesitzventils kann dieses beispielsweise als 3/2-Wegesitzventil, als 4/2-Wegesitzventil oder als 4/3-Wegesitzventil ausgebildet sein. Durch vergleichsweise kurze Stell- bzw. Betätigungswege der jeweiligen Ventilkolben können die jeweiligen, beispielsweise drei oder vier, Fluidanschlüsse entsprechend der gewünschten Schaltstellungen fluidführend miteinander verbunden oder fluiddicht voneinander getrennt werden.

In einer Ausführungsform des Wegesitzventils sind die Ventilkolben paarweise ineinandergreifend, vorzugsweise zwischen jeweils zwei Sitzen, angeordnet und durch eine jeweilige Rückstelleinrichtung relativ zueinander, vorzugsweise in Richtung eines jeweiligen Sitzes, bewegbar. Der Vorteil dieser Ausführungsform liegt darin, dass die Ventilkolben bauraumsparend in einem, in Richtung der Achse betrachtet, kurzen Kolbenraum angeordnet werden können. Durch die Rückstelleinrichtung werden die Ventilkolben gegen- bzw. auseinanderbewegt werden, so dass im unbetätigten Zustand, d.h., ohne Aufbringung einer Betätigungskraft durch die jeweilige Betätigungseinrichtung die Ventilkolben an ihren jeweiligen Sitzen anliegen. Durch die Rückstelleinrichtung wird die Anpresskraft bzw. der Anpressdruck für den jeweiligen Ventilkolben am jeweiligen Sitz vorgegeben.

Vorteilhafterweise sind die Ventilkolben und/oder die zugeordneten Sitze jeweils im Wesentlichen rotationssymmetrisch zur Achse ausgebildet. Die Ventilkolben können jeweils als Kegelkolben ausgebildet sein. Hieraus ergibt sich der Vorteil einer besonders kostengünstigen Realisierung des erfindungsgemäßen Wegesitzventils. Besonders bevorzugt ist der Sitz für den jeweiligen Ventilkolben als quer, vorzugsweise senkrecht, zur Achse angeordnete Ringfläche ausgebildet, an welcher die zugeordnete Stirnfläche des jeweiligen Ventilkolbens typischerweise mit der von der jeweiligen Rückstelleinrichtung aufgebrachten Anpresskraft anliegen kann.

Als Ventilanschlüsse sind ein Tankanschluss, mindestens ein Versorgungsanschluss und mindestens ein Nutz- oder Verbraucheranschluss vorgesehen. Die Fluidanschlüsse sind fluidführend mit dem die Ventilkolben umfassenden Kolbenraum verbunden und typischerweise jeweils als mindestens eine Durchgangsbohrung im Ventilgehäuse ausgebildet. Zweckmäßigerweise sind die Fluidanschlüsse bzw. die Durchgangsbohrungen radial zur Achse verlaufend angeordnet, was einen einfachen konstruktiven Aufbau und eine einfache Fertigung des erfindungsgemäßen Wegesitzventils gewährleistet.

Die jeweilige Betätigungseinrichtung umfasst eine an mindestens einem Ventilkolben angreifende und/oder diesen zumindest teilweise durchgreifende Betätigungsstange. Ein besonders einfacher und kompakter Aufbau ergibt sich, wenn die mindestens eine Betätigungsstange entlang oder parallel zur Achse verläuft, so dass kompliziert aufbauende Betätigungsmechaniken entfallen können. Über die jeweilige Betätigungsstange wird die Betätigungskraft auf den jeweiligen Ventilkolben übertragen und dieser entsprechend der gewählten Richtung entlang der Achse linear bewegt. Bei einer derartigen Betätigung werden der oder die entsprechenden Ventilkolben vom jeweiligen Sitz beabstandet und die entsprechende Fluidverbindung freigegeben. Hierbei ist typischerweise die von der jeweiligen Rückstelleinrichtung aufgebrachte Rückstellkraft auf den jeweiligen Ventilkolben zur Bewegung in Richtung des jeweiligen Sitzes zu überwinden. Nach Abschluss der Betätigung wird der Ventilkolben durch die von der jeweiligen, beispielsweise als Federelement ausgebildeten, Rückstelleinrichtung aufgebrachte Rückstellkraft zurück zum und in Anlage mit dem jeweiligen Sitz geführt.

Die jeweilige Betätigungsstange ist im jeweiligen Ventilkolben geführt, wobei an der jeweiligen Betätigungsstange mindestens ein an mindestens einem Ventilkolben angreifender Mitnehmer angeordnet ist. Eine derartige Ausführung des erfindungsgemäßen Wegesitzventils ist insbesondere dann vorteilhaft, wenn mehrere, beispielsweise zwei, Ventilkolben über eine gemeinsame Betätigungsstange betätigt werden. Bei zwei paarweise ineinandergreifenden Ventilkolben ist typischerweise die Betätigungsstange durch beide Ventilkolben geführt und weist einen ersten bzw. vorderen und einen zweiten bzw. hinteren Mitnehmer auf, die je nach Bewegungsrichtung der Betätigungsstange relativ zu den Ventilkolben an einer ersten bzw. Vorderseite oder an einer zweiten bzw. Hinterseite des Paares bzw. des jeweiligen Ventilkolbens anliegen. Die Mitnehmer sind ortsfest an der Betätigungsstange fixiert bzw. mit dieser verbunden, so dass über die Mitnehmer eine Betätigungskraft von der Betätigungsstange auf den jeweiligen Ventilkolben übertragen werden kann.

Die den jeweiligen Ventilkolben zugeordneten Betätigungsstangen sind im Ventilgehäuse zumindest teilweise ineinandergreifend angeordnet. Besonders bevorzugt ist es, dass an einer Betätigungsstange ein erster und ein dritter Mitnehmer zur Beabstandung eines ersten und eines dritten Ventilkolbens von einem ersten bzw. dritten Sitz vorgesehen sind, dass an einer gegenläufigen anderen Betätigungsstange ein zweiter und ein vierter Mitnehmer zur Beabstandung eines zweiten und eines vierten Ventilkolbens von einem zweiten bzw. vierten Sitz vorgesehen sind, dass zwischen den gegenüberliegenden ersten und zweiten Sitzen für die paarweise ineinandergreifenden ersten und zweiten Ventilkolben ein erster Nutzanschluss vorgesehen ist, dass zwischen den gegenüberliegenden dritten und vierten Sitzen für die paarweise ineinandergreifenden dritten und vierten Ventilkolben ein zweiter Nutzanschluss vorgesehen ist, dass zwischen dem zweiten Sitz und dem dritten Sitz ein Versorgungsanschluss oder ein Tankanschluss vorgesehen ist, und dass zwischen dem ersten bzw. vierten Sitz und dem jeweiligen Ende des Ventilgehäuses jeweils ein Tankanschluss oder ein Versorgungsanschluss vorgesehen ist.

Die Betätigungsstangen für mehrere Ventilkolben sind derart mit- bzw. aneinandergekoppelt, dass jeweils zwei Ventilkolben bei Bewegung der entsprechenden Betätigungsstange bewegt bzw. verfahren werden und eine entsprechende Schaltstellung des Wegeventils eingestellt wird. So werden bei der Betätigung der einen Betätigungsstange eine Fluidverbindung vom Versorgungsanschluss zum zweiten Nutzanschluss und eine weitere Fluidverbindung vom ersten Nutzanschluss zum Tankanschluss freigegeben. Entsprechend werden bei einer Betätigung der anderen Betätigungsstange eine Fluidverbindung vom Versorgungsanschluss zum ersten Nutzanschluss und eine weitere Fluidverbindung vom zweiten Nutzanschluss zum Tankanschluss freigegeben. Es versteht sich, dass Tank- und Versorgungsanschluss miteinander vertauscht sein können. In vergleichbarer Anordnung können drei und mehr Nutzanschlüsse mit Tank- und Versorgungsanschlüssen verbindbar sein, wobei an den den jeweiligen Fluidanschlüssen bzw. Fluidverbindungen zugeordneten Ventilkolben angreifende Betätigungsstangen eingesetzt sind.

Weitere Vorteile und Merkmale der Erfindung ergeben sich aus den Figuren und der nachfolgenden Beschreibung der Zeichnung. Die vorstehend genannten und die weiter angeführten Merkmale können erfindungsgemäß jeweils einzeln oder in beliebigen Kombinationen miteinander verwirklicht sein. Die in den Figuren gezeigten Merkmale sind rein schematisch und nicht maßstäblich zu verstehen. Es zeigen:
- Fig. 1: einen Schnitt durch ein Ausführungsbeispiel eines erfindungsgemäßen Wegesitzventils; und
- Fig. 2: ein Schaltsymbol für das beispielhafte Wegesitzventil aus Fig. 1.

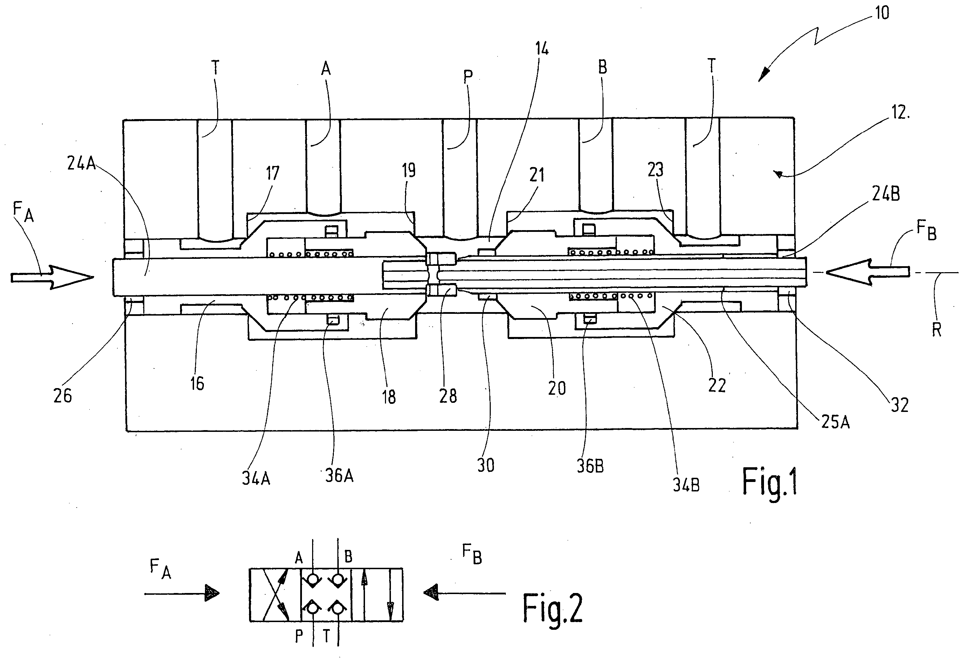

Fig. 1 zeigt im Schnitt ein Wegesitzventil 10 mit einem Ventilgehäuse 12, in dessen Kolbenraum 14 ein erster Ventilkolben 16, ein zweiter Ventilkolben 18, ein dritter Ventilkolben 20 und ein vierter Ventilkolben 22 angeordnet sind. Der länglich ausgebildete Kolbenraum 14 erstreckt sich in Richtung einer Achse R, welche zugleich eine Rotationsachse für die jeweiligen Ventilkolben 16-22 darstellt. Die vier Ventilkolben 16-22 sind in Inline-Bauweise entlang der Achse R angeordnet, wobei der erste und der zweite Ventilkolben 16, 18 sowie der dritte und der vierte Ventilkolben 20, 22 jeweils paarweise ineinandergreifend angeordnet sind. Die beiden Paare aus jeweils zwei Ventilkolben 16, 18; 20, 22 sind nacheinander entlang der Achse R im Kolbenraum 14 angeordnet.

Jedem Ventilkolben 16-22 ist ein Sitz 17-23 zugeordnet, wobei jeder Sitz 17-23 als rotationssymmetrisch zur Achse R ausgebildete Ringfläche ausgebildet ist und den jeweiligen Aufnahmeabschnitt des Kolbenraums 14 zur Aufnahme des einen Paares aus erstem und zweitem Ventilkolben 16, 18 bzw. des anderen Paares aus drittem und viertem Ventilkolben 20, 22 jeweils stirnseitig begrenzt. Im gezeigten unbetätigten Zustand liegen die Ventilkolben 16-22 am jeweiligen Sitz 17-23 an. Die hierfür erforderliche Anpresskraft wird durch jeweils eine Rückstelleinrichtung 34A, 34B aufgebracht, welche jeweils innerhalb der paarweise ineinandergreifenden Ventilkolben 16, 18; 20, 22 angeordnet ist und diese relativ zu- und gegeneinander zum jeweiligen Ventilsitz 17, 19; 21, 23 führt. Zwischen den paarweisen miteinander verbundenen Ventilkolben 16, 18; 20, 22 ist jeweils eine ringförmige Dichteinrichtung 36A, 36B angeordnet.

Zur Bewegung der Ventilkolben 16-22 sind zwei Betätigungsstangen 24A, 24B vorgesehen, welche entlang der Achse R im Kolbenraum 14 und im Bereich des Kolbenraums 14 ineinandergreifend angeordnet sind. Die beiden Betätigungsstangen 24A, 24B sind jeweils Teil einer weiter nicht gezeigten Betätigungseinrichtung, welche jeweils eine in eine jeweilige Richtung gerichtete Betätigungskraft F_{A}, F_{B} auf die jeweilige Betätigungsstange 24A, 24B aufbringt. Um die Betätigungskräfte F_{A}, F_{B} von den Betätigungsstangen 24A, 24B auf die jeweiligen Kolben 16-22 zu übertragen, sind Mitnehmer 26-32 an den beiden Betätigungsstangen 24A, 24B derart vorgesehen, dass sie jeweils stirnseitig am jeweiligen Ventilkolben 16-22 angreifen, um diesen vom jeweiligen Ventilsitz 17-23 zu beabstanden. In der in Fig. 1 gezeigten Ausführungsform sind die beiden Paare von Ventilkolben 16, 18; 20, 22 derart symmetrisch zur (nicht eingezeichneten) Mittenebene des Kolbenraums 14 bzw. des Ventilgehäuses 12 angeordnet, dass über eine in Fig. 1 nach rechts gerichtete Betätigungskraft F_{A} der erste Ventilkolben 16 durch den ersten Mitnehmer 26 vom ersten Sitz 17 und der dritte Ventilkolben 20 durch den dritten Mitnehmer 30 vom dritten Ventilsitz 21 beabstandbar ist. Entsprechend ist bei einer entgegengerichteten, in Fig. 1 nach links gerichteten Betätigungskraft F_{B} der zweite Ventilkolben 18 durch den zweiten Mitnehmer 28 vom zweiten Ventilsitz 16 und der vierte Ventilkolben 22 durch den vierten Mitnehmer 32 vom vierten Sitz 23 beabstandbar. Hierbei ist zu beachten, dass der erste und der dritte Mitnehmer 26, 30 an der in Fig. 1 links gezeigten einen Betätigungsstange 34A und der zweite und vierte Mitnehmer 28, 32 an der in Fig. 1 rechts gezeigten anderen Betätigungsstange 24B angeordnet sind.

Im Ventilgehäuse 12 sind nacheinander entlang des Kolbenraums 14, in Fig. 1 von links nach rechts, ein Tankanschluss T, ein erster Nutzanschluss A, ein Versorgungsanschluss P, ein zweiter Fluidanschluss B und wiederum ein Tankanschluss T ausgebildet. Der erste Tankanschluss T und der erste Fluidanschluss A werden von dem einen Paar aus erstem und zweitem Ventilkolben 16, 18 angesteuert, entsprechend der zweite Nutzanschluss B und der zweite Tankanschluss T von dem anderen Paar aus drittem und viertem Ventilkolben 20, 22. Der mittig zwischen beiden Paaren angeordnete Versorgungsanschluss P wird von den benachbarten, dem zweiten und dem dritten, Ventilkolben 18, 20 angesteuert. Im in Fig. 1 gezeigten unbetätigten Zustand bzw. der entsprechenden Schaltstellung des Wegesitzventils 10 liegen sämtliche Ventilkolben 16-22 am jeweiligen Sitz 17-23 an, wodurch die Fluidanschlüsse A-T weitestgehend leckfrei fluiddicht voneinander getrennt sind. Durch die symmetrische, gleichartige Ausbildung der Ventilkolben 16-22, der Ventilsitze 17-23 sowie der Rückstelleinrichtungen 34A, 34B bzw. der jeweiligen Rückstellkraft ist die Ventilanordnung im unbetätigten Zustand kraftausgeglichen. Die unbetätigte Schaltstellung des Wegesitzventils 10 ist im Schaltsymbol aus Fig. 2 mittig gezeigt.

Bei einer Betätigung bzw. Bewegung der in Fig. 1 links gezeigten einen Betätigungsstange 24A entsprechend der einen Betätigungskraft F_{A} werden der erste und der dritte Ventilkolben 16, 20 vom ersten bzw. dritten Sitz 17, 21 beabstandet und entsprechend eine Fluidverbindung vom ersten Nutzanschluss A zum Tankanschluss T sowie eine weitere Fluidverbindung vom Versorgungsanschluss P zum zweiten Nutzanschluss B freigegeben. Durch die Betätigung bzw. Bewegung der einen Betätigungsstange 24A werden die Rückstelleinrichtungen 34A, 34B weiter komprimiert, wodurch der jeweilige Anpressdruck des zweiten und des vierten Ventilkolbens 18, 22 am zweiten bzw. vierten Sitz 19, 23 entsprechend erhöht wird, so dass eine Fluidverbindung vom Versorgungsanschluss P zum ersten Nutzanschluss A sowie eine weitere Fluidverbindung vom zweiten Nutzanschluss B zum Tankanschluss T gesperrt bleiben. Die durch die eine Betätigungskraft F_{A} erreichbare Schaltstellung des Wegesitzventils 10 ist in Fig. 2 links dargestellt. Nach Ende der Beaufschlagung mit der einen Betätigungskraft F_{A} werden die beiden, erster und dritter, Ventilkolben 16, 20 durch die Rückstelleinrichtungen 23A, 34B zurück zum und in Anlage mit dem ersten bzw. dritten Sitz 17, 21 geführt. Entsprechend nehmen die Betätigungsstangen 24A, 24B nebst Mitnehmern 26-32 wieder ihre jeweilige Stellung bzw. Position im unbetätigten Zustand ein.

Bei einer Betätigung bzw. Bewegung der in Fig. 1 rechts gezeigten anderen Betätigungsstange 24B werden der zweite und vierte Ventilkolben 18, 22 vom zweiten bzw. vierten Sitz 19, 23 beabstandet und entsprechend eine Fluidverbindung vom Versorgungsanschluss P zum ersten Nutzanschluss A und eine weitere Fluidverbindung vom zweiten Nutzanschluss B zum Tankanschluss T freigegeben. Durch die Betätigung der anderen Betätigungsstange 24B werden die Rückstelleinrichtungen 34A, 34B komprimiert und folglich der jeweilige Anpressdruck des ersten und des dritten Ventilkolbens 16, 20 am ersten bzw. dritten Sitz 17, 21 erhöht und die entsprechenden Fluidverbindungen vom ersten Nutzanschluss A zum Tankanschluss T sowie vom Versorgungsanschluss P zum zweiten Nutzanschluss B gesperrt. Die der Betätigung der anderen Betätigungsstange 24B mit der anderen Betätigungskraft F_{B} entsprechende Schaltstellung des Wegesitzventils 10 ist in Fig. 2 rechts gezeigt. Fig. 2 ist ohne Weiteres entnehmbar, dass das Wegesitzventil 10 ein 4/3-Wegesitzventil mit drei Schaltstellungen für Fluidverbindungen zwischen vier Fluidanschlüssen A, B, P, T ist. Nach Ende der Beaufschlagung mit der anderen Betätigungskraft F_{B} werden die beiden, zweiter und vierter, Ventilkolben 18, 22 durch die Rückstelleinrichtungen 34A, 34B zurück zum und in Anlage mit dem zweiten bzw. vierten Sitz 19, 23 geführt. Entsprechend nehmen die Betätigungsstangen 24A, 24B nebst Mitnehmern 26-32 wieder ihre jeweilige Stellung bzw. Position im unbetätigten Zustand ein.

Das in Fig. 1 gezeigte Wegesitzventil 10 ist ein direkt gesteuertes Ventil. Auch eine vorgesteuerte Ausgestaltung des erfindungsgemäßen Wegesitzventils 10 ist denkbar. Im Inneren der paarweise ineinandergreifenden Ventilkolben 16-22, der ineinandergreifenden bzw. ineinanderlaufenden Betätigungsstangen 24A, 24B und der weiter nicht dargestellten Betätigungseinrichtungen liegt typischerweise der am Versorgungsanschluss P anstehende Fluiddruck an. In Abhängigkeit der Lage der Mitnehmer 26-32 kann eine positive oder negative Überdeckung der Steuerkanten realisiert werden. Des Weiteren kann durch die Mitnehmer 26-32 ein Toleranzausgleich dahingehend erreicht werden, dass sämtliche Ventilkolben 16-22 im unbetätigten Zustand, anders ausgedrückt in der Mittelstellung, am jeweiligen Sitz 17-23 anliegen und die entsprechenden Fluidverbindungen sperren. Bedarfsabhängig können an den Ventilkolben 16-22 weitere Dichteinrichtungen ausgebildet sein. Im gezeigten Ausführungsbeispiel umgreift die eine Betätigungsstange 24A die andere Betätigungsstange 24B bis zum Stangenende 25A am gegenüberliegenden Ende des Kolbenraums 14. Entsprechend ragt die andere Betätigungsstange 24B in die eine Betätigungsstange 24A hinein, wobei das entsprechende Stangenende in Fig. 1 nicht gezeigt ist.

## Patentansprüche

1. Wegesitzventil (10), umfassend in einem Ventilgehäuse (12) angeordnete Ventilkolben (16-22) zur Ansteuerung mehrerer Fluidanschlüsse (A, B, P, T), wobei die Ventilkolben (16-22) mittels mindestens einer Betätigungseinrichtung in ihrer jeweiligen Stellung im Ventilgehäuse (12) veränderbar sind, wobei die Fluidanschlüsse (A, B, P, T) in Abhängigkeit von der Stellung der Ventilkolben (16-22) wechselweise miteinander verbunden oder voneinander getrennt sind, wobei die Ventilkolben (16-22) entlang mindestens einer Achse (R) zumindest teilweise ineinandergreifend im Ventilgehäuse (12) angeordnet sind, wobei die jeweilige Betätigungseinrichtung eine an mindestens einem Ventilkolben (16-22) angreifende und/oder diesen zumindest teilweise durchgreifende, vorzugsweise entlang oder parallel zur Achse (R) gerichtete, Betätigungsstange (24A, 24B) umfasst, wobei die jeweilige Betätigungsstange (24A, 24B) im jeweiligen Ventilkolben (16-22) geführt ist und wobei an der jeweiligen Betätigungsstange (24A, 24B) mindestens ein an mindestens einem Ventilkolben (16-22) angreifender Mitnehmer (26-32) angeordnet ist, **dadurch gekennzeichnet,**
- **dass** die den jeweiligen Ventilkolben (16-22) zugeordneten Betätigungsstangen (24A, 24B) im Ventilgehäuse (12) zumindest teilweise ineinandergreifend angeordnet sind;
- **dass** an einer Betätigungsstange (24A) ein erster und ein dritter Mitnehmer (26, 30) zur Beabstandung eines ersten und eines dritten Ventilkolbens (16, 20) von einem ersten bzw. dritten Sitz (17, 21) vorgesehen sind;
- **dass** an einer gegenläufigen anderen Betätigungsstange (24B) ein zweiter und ein vierter Mitnehmer (28, 32) zur Beabstandung eines zweiten und eines vierten Ventilkolbens (18, 22) von einem zweiten bzw. vierten Sitz (19, 23) vorgesehen sind;
- **dass** zwischen den gegenüberliegenden ersten und zweiten Sitzen (17, 19) für die paarweise ineinandergreifenden und durch eine Rückstelleinrichtung (34A) relativ zueinander bewegbaren ersten und zweiten Ventilkolben (16, 18) ein erster Nutzanschluss (A) vorgesehen ist;
- **dass** zwischen den gegenüberliegenden dritten und vierten Sitzen (21, 23) für die paarweise ineinandergreifenden und durch eine Rückstelleinrichtung (34B) relativ zueinander bewegbaren dritten und vierten Ventilkolben (20, 22) ein zweiter Nutzanschluss (B) vorgesehen ist;
- **dass** zwischen dem zweiten Sitz (19) und dem dritten Sitz (21) ein Versorgungsanschluss (P) oder ein Tankanschluss (T) vorgesehen ist; und
- **dass** zwischen dem ersten bzw. vierten Sitz (17, 23) und dem jeweiligen Ende des Ventilgehäuses (12) jeweils ein Tankanschluss (T) oder ein Versorgungsanschluss (P) vorgesehen ist.

2. Wegesitzventil nach Anspruch 1, **dadurch gekennzeichnet, dass** die Ventilkolben (16-22) und/oder die zugeordneten Sitze (17-23) jeweils im Wesentlichen rotationssymmetrisch zur Achse (R) ausgebildet sind.

## Claims

1. A directional poppet valve (10), comprising valve pistons (16-22) arranged in a valve housing (12) for controlling a plurality of fluid connections (A, B, P, T), wherein the position of each of the valve pistons (16-22) in the valve housing (12) can be changed by means of at least one actuation device, wherein the fluid connections (A, B, P, T) are alternately connected to one another or separated from one another, depending on the position of the valve pistons (16-22), wherein the valve pistons (16-22) are arranged along at least one axis (R) at least partially in interengaging manner in the valve housing (12), wherein the respective actuation device comprises an actuating rod (24A, 24B), acting on at least one valve piston (16-22) and/or at least partially passing through same, preferably directed along, or parallel to, the axis (R), wherein the respective actuation rod (24A, 24B) is guided into the respective valve piston (16-22) and wherein at least one actuator (26-32), acting on at least one valve piston (16-22), is arranged on the respective actuation rod (24A, 24B), **characterised in that**
- the actuation rods (24A, 24B) allocated to the respective valve pistons (16-22) are arranged in at least partially interengaging manner in the valve housing (12);
- a first and a third actuator (26, 30) are provided on an actuation rod (24A) to space a first and a third valve piston (16, 20) from a first and third seat (17, 21) respectively;
- a second and a fourth actuator (28, 32) are provided on another actuation rod (24B) oriented in the opposing direction to space a second and a fourth valve piston (18, 22) from a second and fourth seat (19, 23) respectively;
- a first utility connection (A) is provided between the opposing first and second seats (17, 19) for the first and second valve pistons (16, 18), which interengage as a pair and can be moved relative to one another by a resetting device (34A);
- a second utility connection (B) is provided between the opposing third and fourth seats (21, 23) for the third and fourth valve pistons (20, 22), which interengage as a pair and can be moved relative to one another by a resetting device (34B);
- a supply connection (P) or a tank connection (T) is provided between the second seat (19) and the third seat (21); and
- a tank connection (T), or a supply connection (P), respectively, is provided between the first or the fourth seat (17, 23), respectively, and the respective end of the valve housing (12).

2. The directional poppet valve according to claim 1, **characterised in that** the valve pistons (16-22) and/or the associated seat (17-23) are each formed substantially rotationally symmetrical to the axis (R).

## Revendications

1. Distributeur (10) à siège, comprenant des pistons (16 à 22) de distributeur montés dans un corps (12) de distributeur pour commander plusieurs raccords (A, B, P, T) pour du fluide, les pistons (16 à 22) du distributeur pouvant être modifiés dans leur position respective dans le corps (12) du distributeur au moyen d'au moins un dispositif d'actionnement, les raccords (A, B, P, T) pour du fluide communiquant entre eux ou étant séparés les uns des autres tour à tour en fonction de la position des pistons (16 à 22) du distributeur, les pistons (16 à 22) du distributeur étant disposés dans le corps (12) du distributeur en s'interpénétrant, au moins en partie, suivant au moins un axe (R), le dispositif d'actionnement respectif comprenant une tringle (24A, 24B) d'actionnement attaquant au moins un piston (16 à 22) du distributeur et/ou traversant celui-ci, au moins en partie, en étant dirigée, de préférence, suivant l'axe (R) ou parallèlement à celui-ci, la tringle (24A, 24B) d'actionnement respective étant guidée dans le piston (16 à 22) du distributeur respective et dans lequel, sur la tringle (24A, 24B) d'actionnement respectif, est monté au moins un entraîneur (26 à 32) attaquant au moins un piston (16 à 22) du distributeur, **caractérisé**
- **en ce que** les tringles (24a, 24B) d'actionnement associées aux pistons (16 à 22) respectifs du distributeur sont disposées dans le corps (12) du distributeur en s'interpénétrant, au moins en partie ;
- **en ce qu'**il est prévu, sur une tringle (24A) d'actionnement, un premier et un troisième entraîneurs (26, 30) de mise à distance d'un premier et d'un troisième pistons (16, 20) du distributeur d'un premier et respectivement d'un troisième sièges (17, 21) ;
- **en ce que**, sur une autre tringle (24B) d'actionnement de sens contraire, sont prévus un deuxième et un quatrième entraîneurs (28, 32) de mise à distance d'un deuxième et d'un quatrième pistons (18, 22) du distributeur d'un deuxième et respectivement d'un quatrième sièges (19, 23) ;
- **en ce qu'**il est prévu un premier raccord (A) utile entre les premier et deuxième sièges (17, 19) opposés pour les premier et deuxième pistons (16, 18) du distributeur s'interpénétrant paire par paire et mobiles les uns par rapport aux autres par un dispositif (34A) de rappel ;
- **en ce qu'**il est prévu un deuxième raccord (B) utile entre les troisième et quatrième sièges (21, 23) opposés pour les troisième et quatrième pistons (20, 22) du distributeur s'interpénétrant paire par paire et mobiles les uns par rapport aux autres par un dispositif (34B) de rappel ;
- **en ce que**, entre le deuxième siège (19) et le troisième siège (21), est prévu un raccord (P) d'alimentation ou un raccord (T) de réservoir et
- **en ce que**, entre le premier ou le quatrième siège (17, 23) et l'extrémité respective du corps (12) du distributeur, est prévu respectivement un raccord (T) de réservoir ou un raccord (P) d'alimentation.

2. Distributeur à siège suivant la revendication 1, **caractérisé en ce que** les pistons (16 à 22) du distributeur et/ou les sièges (17 à 23) associés sont constitués en étant respectivement sensiblement de révolution par rapport à l'axe (R).
